# EUROPÄISCHE PATENTSCHRIFT

(11) **EP 2 430 849 B1**
(45) Veröffentlichungstag und Bekanntmachung des Hinweises auf die Patenterteilung: **19.03.2014**
(21) Anmeldenummer: 10718500.1
(22) Anmeldetag: 26.03.2010
(51) Int. Cl.: H04W 16/18, H04W 40/12, H04W 84/18, H04L 12/26

(54) **Verfahren und Vorrichtung zum Zuordnen und zum Ausführen einer Anwendung in einem verteilten System**
Method and Device for Allocating and Executing an Application in a Distributed System
Procédé et dispositif pour assigner et ecécuter une application dans un système réparti

(30) Priorität: 12.05.2009 DE 102009021007
(43) Veröffentlichungstag der Anmeldung: 21.03.2012
(73) Patentinhaber: Siemens Aktiengesellschaft, 80333 München (DE)
(72) Erfinder: BUCKL, Christian, 82319 Wangen (DE); HEUER, Jörg, 82041 Oberhaching (DE); SCHMITT, Anton, 85591 Vaterstetten (DE); SCHOLZ, Andreas, 85716 Unterschleißheim (DE); WINTER, Martin, 83024 Rosenheim (DE)
(86) Internationale Anmeldenummer: PCT/EP2010/053992
(87) Internationale Veröffentlichungsnummer: WO 2010/130503

(56) Entgegenhaltungen:
- EP-A1- 1 892 656
- US-A1- 2008 279 155
- US-A1- 2009 059 814
- KIM A N ET AL: "When HART goes wireless: Understanding and implementing the WirelessHART standard" EMERGING TECHNOLOGIES AND FACTORY AUTOMATION, 2008. ETFA 2008. IEEE INTERNATIONAL CONFERENCE ON, IEEE, PISCATAWAY, NJ, USA, 15. September 2008 (2008-09-15), Seiten 899-907, XP031344720 ISBN: 978-1-4244-1505-2

## Beschreibung

Die Erfindung betrifft ein Verfahren und eine Vorrichtung zum Plazieren von Einheiten zum Ausführen einer Anwendung in einem verteilten System.

Bei einer Prozessautomatisierung, wie bspw. in Industrieanlagen oder bei Gebäudemanagementanlagen, werden in zunehmendem Masse Einheiten als Sensoren und Aktoren mit Kommunikationsinterfaces eingesetzt, die in einem Gebäude verteilt angeordnet sind. Diese können in einem drahtlosen Netzwerk eingebunden sind. Ferner können sie mittels Batterie betrieben werden, also autark sein.

Bei der Implementierung einer Anwendung mittels dieser Einheiten kann die Anwendung über zwei oder mehrere Einheiten verteilt werden.

Die US 2009/059814 A1 beschreibt ein Software-basiertes Netzwerk-Entwurfswerkzeug, das dazu verwendet werden kann, den Betrieb eines in einer Prozessfabrik verwendeten drahtlosen Mesh-Device-Netzwerks zu simulieren und zu betrachten, und das es Anwendern erlaubt, ein Modell eines drahtlosen Netzwerks zu erstellen, Entwurfs-Anforderungen einzugeben und automatisch Kommunikationswege und Ablaufpläne für das drahtlose Netzwerk zu generieren.

Die US 2008/279155 A1 beschreibt ein Verfahren zum adaptiven Scheduling von Kommunikation in einem drahtlosen Mesh-Netzwerk mit einer Vielzahl von Netzwerkknoten.

Das Dokument "When HART goes wireless: understanding and implementing the WirelessHART standard" von Kim A.N. et al., IEEE International Conference on Emerging Technologies and Factory Automation (ETFA) 2008, Piscataway, NJ, USA, 15. September 2008, Seiten 899-907, ISBN: 978-1-4244-1505-2, beschreibt allgemeine Hintergrundinformationen zum WirelessHART-Standard.

Die EP 1 892 656 A1 beschreibt den Kosten-basierten Einsatz von Komponenten in einer Smart Item-Umgebung durch Verteilung von Komponentenservices auf Service-Ausführungsumgebungen.

Somit ist es die Aufgabe der Erfindung ein Verfahren und eine Vorrichtung anzugeben, mit denen eine Anwendung mittels mehrerer Einheiten in energieeffizienter Weise realisiert werden kann.

Diese Aufgabe wird durch die unabhängigen Ansprüche gelöst. Weiterbildungen der Erfindung sind den abhängigen Ansprüchen zu entnehmen.

Die Erfindung betrifft ein Verfahren zum Zuordnen und zum Ausführen einer Anwendung in Einheiten eines verteilten Systems,
wobei die Anwendung in zumindest zwei Teilanwendungen aufgeteilt wird und mittels Einheiten des verteilten Systems implementiert wird, welche über ein Netzwerk mit Kommunikationsverbindungen drahtlos Informationen austauschen können, bei dem folgende Schritte durchgeführt werden:
- Zuordnen der jeweiligen Teilanwendung zu einer jeweiligen ersten Einheiten, wobei die ersten Einheiten aus den Einheiten ausgewählt wird, derart, dass
   (a) die jeweilige erste Einheit die zugeordnete Teilanwendung ausführen kann,
   (b) eine Anzahl an Einheiten auf den Kommunikationsverbindungen zum Verbinden der ersten Einheiten minimiert wird;
- Ermitteln von jeweiligen Verbindungsparametern für die jeweiligen Kommunikationsverbindungen;
- Bestimmen der Kommunikationsverbindungen zum Verbinden von zwei der ersten Einheiten;
- Konfigurieren des Netzwerks gemäß dem Bestimmen der Kommunikationsverbindungen.

Dabei werden Informationen, die von einer der ersten Einheiten zu zwei der ersten Einheiten zu übermitteln sind, zumindest über eine Teilverbindung zu einer der Einheiten mittels einer einzigen Nachricht übertragen und dann zur Übermittlung zu den zwei der ersten Einheiten als zwei separate Nachrichten weitergesendet.

Das Verfahren zeigt den Vorteil, Energie bei Ausführen der Anwendung in dem verteilten System dadurch einzusparen, dass die Anwendung durch eine Reihe von Services dadurch realisiert wird, dass diese Services, die auf den Einheiten implementiert sind, entsprechend bestehenden Kommunikationsverbindungen zwischen den Einheiten platziert werden können. Umgekehrt können Kommunikationsbeziehungen zwischen den Einheiten dazu genutzt werden, die Kommunikation entsprechend den Anforderungen der Anwendung zu konfigurieren. Das Verfahren ermöglicht dabei eine Reduktion des Energiebedarfs beim Ausführen der Anwendung, da durch eine Platzierung der ersten Einheiten in nahen Abständen die jeweiligen Kommunikationsverbindungen kurz gehalten werden.

Ferner wird durch die Zusammenfassung von Nachrichten auf derselben Teilverbindung der Kommunikationsverbindung eine Reduktion von zu übertragenden Nachrichten erzielt. Hierdurch lässt sich eine Ende-zu-Ende Übertragungszeit und ein Energiebedarf zum Betrieb der Anwendung in dem verteilten System weiter reduzieren.

In einer Erweiterung des Verfahrens wird beim Zuordnen der jeweiligen Teilanwendung ferner gewährleistet, dass der jeweilige Verbindungsparameter einer der Kommunikationsverbindungen zum Verbinden von zwei der ersten Einheiten zumindest eine jeweilige Anforderung zum Austausch von Informationen zwischen den, den zwei der ersten Einheiten zugeordneten, Teilanwendungen erreicht.

Hiermit wird gewährleistet, dass nicht nur kurze Kommunikationsverbindungen zwischen den ersten Einheiten erreicht werden, sondern auch diejenigen Teilverbindungen ausgewählt werden, die die jeweilige Anforderung der zu verbindenden zwei ersten Einheiten erfüllen.

In einer optionalen Weiterbildung kann zumindest eine der Kommunikationsverbindungen, die zum Austausch von Informationen zwischen zwei der ersten Einheiten ungenutzt bleibt, deaktiviert werden. Durch die Deaktivierung von nicht verwendeten Einheiten wird eine weitere Reduktion der Energie bei Betrieb des verteilten Systems erreicht.

In einer weiteren optionalen Erweiterung werden das Zuordnen der jeweiligen Teilanwendung und Bestimmen der Kommunikationsverbindungen durch eine Serviceschicht und das Ermitteln von jeweiligen Verbindungsparametern und Konfigurieren des Netzwerks durch eine Kommunikationsschicht durch Austausch von Informationen ausgeführt.
Der Einsatz der Serviceschicht und der Kommunikationsschicht, die zum Aufbau der Anwendung in dem verteilten System Informationen in beide Richtungen austauschen, ermöglicht eine optimierte Platzierung der Einheiten, da eine Abstimmung zwischen dem Platzieren der Einheiten und der verfügbaren Kommunikationsinfrastruktur erzielt wird. Im Gegensatz dazu würde eine Struktur, in der die Serviceschicht unabhängig von der Kommunikationsschicht ausgeführt wird zu keiner optimalen Platzierung führen, da ein schrittweises Abstimmen der gesamten Schichten nicht möglich ist.

Die Erfindung betrifft ferner eine Vorrichtung zum Zuordnen und zum Ausführen einer Anwendung in Einheiten eines verteilten Systems,
wobei die Anwendung in zumindest zwei Teilanwendungen aufgeteilt wird und mittels Einheiten des verteilten Systems implementiert wird, welche über ein Netzwerk mit Kommunikationsverbindungen drahtlos Informationen austauschen können, mit folgenden Mitteln:
- Erstes Mittel zum Zuordnen der jeweiligen Teilanwendung zu einer jeweiligen ersten Einheiten der Einheiten derart, dass
   (a) die jeweilige erste Einheit die zugeordnete Teilanwendung ausführen kann,
   (b) eine Anzahl an Einheiten auf den Kommunikationsverbindungen zum Verbinden der ersten Einheiten minimierbar ist;
- Zweites Mittel zum Ermitteln von jeweiligen Verbindungsparametern für die jeweiligen Kommunikationsverbindungen;
- Drittes Mittel zum Bestimmen der Kommunikationsverbindungen zum Verbinden von zwei der ersten Einheiten;
- Viertes Mittel zum Konfigurieren des Netzwerks gemäß dem Bestimmen der Kommunikationsverbindungen.

Zusätzlich weist die Vorrichtung ferner ein fünftes Mittel auf, das derart ausgestaltet ist, dass Informationen, die von einer der ersten Einheiten zu zwei der ersten Einheiten zu übermitteln ist, zumindest über eine Teilverbindung zu einer der Einheiten mittels einer einzigen Nachricht übertragbar und dann zur Übermittlung zu den zwei der ersten Einheiten als zwei separate Nachrichten weitersendbar ist.

Vorzugsweise ist das erste Mittels der Vorrichtung ferner derart ausgestaltet, dass beim Zuordnen der jeweiligen Teilanwendung ferner gewährleistbar ist, dass der jeweilige Verbindungsparameter einer der Kommunikationsverbindungen zum Verbinden von zwei der ersten Einheiten zumindest eine jeweilige Anforderung zum Austausch von Informationen zwischen den, den zwei der ersten Einheiten zugeordneten, Teilanwendungen erreicht.

In einer optionalen Erweiterung der Vorrichtung ist das vierte Mitteln ferner derart ausgestaltet, dass zumindest eine der Kommunikationsverbindungen, die zum Austausch von Informationen zwischen zwei der ersten Einheiten ungenutzt bleibt, deaktivierbar ist.

Vorzugsweise ist die Vorrichtung derart ausgestaltet, dass das Zuordnen der jeweiligen Teilanwendung und Bestimmen der Kommunikationsverbindungen durch eine Serviceschicht und das Ermitteln von jeweiligen Verbindungsparametern und Konfigurieren des Netzwerks durch eine Kommunikationsschicht (NLY) zum Austausch von Informationen ausführbar sind.

Die Vorrichtung und ihre Erweiterungen zeigen dieselben Vorteile wie die dazu korrespondierenden Verfahrensschritte.

Die Erfindung und ihre Weiterbildungen werden anhand von Figuren näher erläutert. Es zeigen:
- Figur 1: Einheiten in einem Netzwerk vor Ausführen des Verfahrens zum Plazieren;
- Figur 2: Platzierung der Einheiten zum Ausführen einer Anwendung in einem verteilten System und die dazugehörigen Kommunikationsverbindungen;
- Figur 3: Verfahrenschritte eines weiteren Ausführungsbei-spiels;
- Figur 4: Vorrichtung zum Ausführen des Verfahrens mit mehreren Mitteln;
- Figur 5: Serviceschicht und Kommunikationsschicht, die das weitere Ausführungsbeispiel realisieren.

Elemente mit gleicher Funktion und gleicher Wirkungsweise sind in den Figuren mit denselben Bezugszeichen versehen.

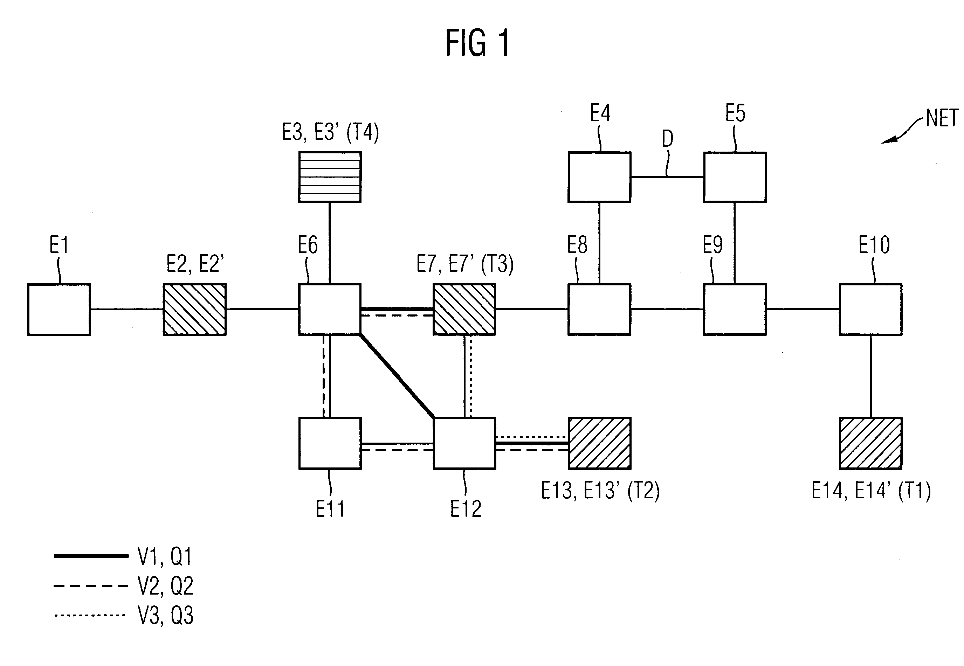

Figur 1 zeigt beispielhaft ein Netzwerk NET mit vierzehn Einheiten E1, ..., E14. Diese Einheiten sind Teil eines Sensor-Netzwerkes, wobei die Einheiten autark sind und mittels eines Kommunikationsinterfaces drahtlos Informationen austauschen, wie bspw. auf Basis eines Standard ZigBee. Zumindest teilweise können die Einheiten Informationen über zwischen zwei Einheiten bestehenden Kommunikationsverbindungen V1, V2, V3 übermitteln. So kann die Einheit E13 mit der Einheit E7 über folgende drei Ende-zu-Ende Pfade, die jeweils eine der Kommunikationsverbindungen repräsentieren, kommunizieren:
V1: E13-E12-E6-E7
V2: E13-E12-E11-E6-E7
V3: E13-E12-E7

Diese Kommunikationsverbindungen unterscheiden sich in ihrer QoS (QoS - Quality of Service = Servicequalität), die bspw. eine Bandbreite, eine Übertragungsverzögerung, eine Sendestärke, eine Restfehlerrate etc. umfasst. So zeigen die drei Kommunikationsverbindungen folgende QoS, die als Verbindungsparameter Q1, Q2, Q3 bezeichnet werden:
Q1 für V1: Verzögerung: 5 Sekunden, Bandbreite 2 kbit/s
Q2 für V2: Verzögerung: 10 Sekunden, Bandbreite 10 kbit/s
Q3 für V3: Verzögerung 20 Sekunden, Bandbreite 50 kbit/s

Einige der Einheiten können spezielle Aufgaben übernehmen:
- Einheiten E13 und E14, siehe Schraffur von links unten nach rechts oben, erfassen Temperaturwerte;
- Einheiten E2 und E7, siehe Schraffur von links oben nach links unten können einfache Rechenoperationen übernehmen;
- Einheit E3 kann Messwerte bereitstellen bzw. anzeigen.

Mit Hilfe zumindest einiger der Einheiten soll die Anwendung realisiert werden, dass zwei der Einheiten jeweils eine Temperatur ermitteln, eine weitere Einheit die zwei Temperaturwerte zu einem Mittelwert verarbeitet und der Mittelwert an die Einheit E3 zugestellt wird. Diese Anwendung kann in folgende Teilanwendungen T1, T2, T3, T4, die jeweils als Service bezeichnet werden, aufgeteilt werden:
T1: Temperaturmessung 1
T2: Temperaturmessung 2
T3: Mittelwertermittlung
T4: Bereitstellen des Mittelwertes

Folgende Schritte werden zum Ausführen der Anwendung durchgeführt.

In einem Schritt S1 werden die Verbindungsparameter Q1, Q2, Q3 für Verbindungen der Einheiten ermittelt. In einer Erweiterung des Verfahrens werden nur die Verbindungsparameter ermittelt, die jeweils eine Verbindung zwischen zwei Einheiten beschreiben, die die jeweils zumindest eine der Teilanwendungen durchführen können.

In einem nächsten Schritt S2 werden die jeweiligen Teilanwendungen jeweiligen ersten Einheiten aus der Gesamtmenge aller vorhandenen Einheiten mit folgenden Bedingungen zugeordnet:
(a) der Teilanwendung kann nur derjenigen Einheit zugeordnet werden, die die Teilanwendung ausführen kann. In Figur 1 können nur die Einheiten E13 und E14 überhaupt Temperaturmessungen durchführen, so dass ihnen die Teilanwendungen T1 und T2 zugewiesen werden. Ferner können nur die Einheiten E2 und E7 die Teilanwendung T3 erledigen. Mit Hilfe der nächsten Bedingung (b) wird dann eine Auswahl getroffen, welche der Einheiten E2, E7 diese Teilanwendung T3 übernimmt. Die Teilanwendung T4 kann nur von der Einheit E3, siehe als Schraffur horizontale Linien, durchgeführt werden.
(b) eine Anzahl an Einheiten, die zwischen den zu ermittelnden ersten Einheiten liegen ist zu minimieren. Das bedeutet, dass falls mehrere Kommunikationsverbindungen zur Verbindung von zwei ersten Einheiten verfügbar sind, diejenige zu verwenden ist, die eine minimale Anzahl an weiteren Einheiten durchquert. Jedoch muss bei Anwendung dieser Bedingung berücksichtigt werden, dass als Kommunikationsverbindung zwischen zwei ersten Einheiten diejenige zu wählen ist, die auch die Anforderung der jeweiligen Teilanwendung zum Austausch von Informationen gewährleistet.

Dies wird am Beispiel der drei Kommunikationsverbindungen V1, V2, V3 näher erläutert. Die Teilanwendung T1, die auf der ersten Einheit E13 ausgeführt wird, benötigt 0,2 kbit/s an Bandbreite und eine maximale Verzögerung von 12 Sekunden. Zwar führt die Verbindung V3 nur über 1 Einheit, wohingegen die Verbindungen V2 über 3 und V1 über 2 Einheiten gehen, jedoch erfüllen die Verbindungsparameter Q3 der Verbindung V3 nicht die Anforderungen der Teilanwendung T1. Somit wird die Verbindung V1 nicht gewählt. Die Verbindung V1 und V2 erfüllen die Anforderungen der Teilanwendung T1, wobei die Verbindung V1 gewählt wird, da diese die wenigsten Einheiten durchquert.

Folgende zwei Sets an ersten Einheiten sind möglich:
SET1: E14 für T1, E13 für T2, E2 für T3, E3 für T4
SET2: E14 für T1, E13 für T2, E7 für T3, E3 für T4

Im SET1 werden Temperaturwerte der Einheit E14 über E14-E10-E9-E8-E7-E6-E2 und der Einheit E13 über E13-E12-E6-E2 an E2 geliefert und der Mittelwert dann über E2-E6-E3 an E3 zugeführt. Somit werden im SET1 8 Einheiten durchquert.

Im SET2 werden Temperaturwerte der Einheit E14 über E14-E10-E9-E8-E7 und der Einheit E13 über E13-E12-E6-E7 an E2 geliefert und der Mittelwert dann über E2-E6-E3 an E3 zugestellt. Somit werden im SET1 6 Einheiten durchquert. Da im SET2 durch die Kommunikationsverbindungen weniger Einheiten durchquert werden, werden somit als erste Einheiten E14=E14', E7=E7', E13=E13' und E3=E3' gewählt. Einige der übrigen Einheiten des Netzwerkes dienen nur zum Übertragen der Informationen.

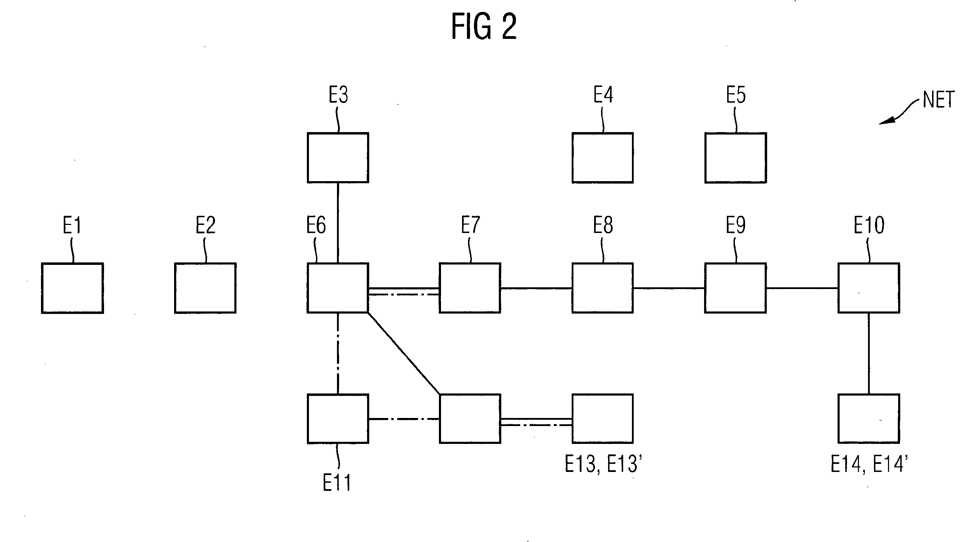

In einem weiteren Schritt S3 wird auf Basis der ermittelten ersten Einheiten und der dazugehörigen Kommunikationsverbindungen das Netzwerk dahingehend optimiert, dass nicht benötigte Verbindungen bzw. Teilverbindungen deaktiviert werden. Dazu wird den Einheiten mitgeteilt, (i) welche Verbindungen nicht benötigt werden und (ii) wie benötigte Verbindungen zu konfigurieren sind. So wird die Verbindung E8-E4 deaktiviert und die Verbindung E13-E12-E6-E7 auf die Anforderung der Teilanwendung T1 gedrosselt. Die Maßnahmen (i) und (ii) bewirken, dass ein Energieverbrauch für die Übertragung von Information in dem verteilten System reduziert wird. Figur 2 zeigt das Netwerk NET nach Abschluss des Verfahrens. Dabei zeigen die Teilverbindungen, gekennzeichnet mit einer durchgezogenen Linie, zwischen jeweils zwei Einheiten, Teilverbindungen der für die Anwendung verwendeten Kommunikationsverbindungen. Zudem können auch Ersatzteilverbindungen konfiguriert werden, markiert mit Punkt-Strich Linien, die im Falle eines Ausfalls von Kommunikationsverbindungen oder von Teilen davon diese ersetzen können.

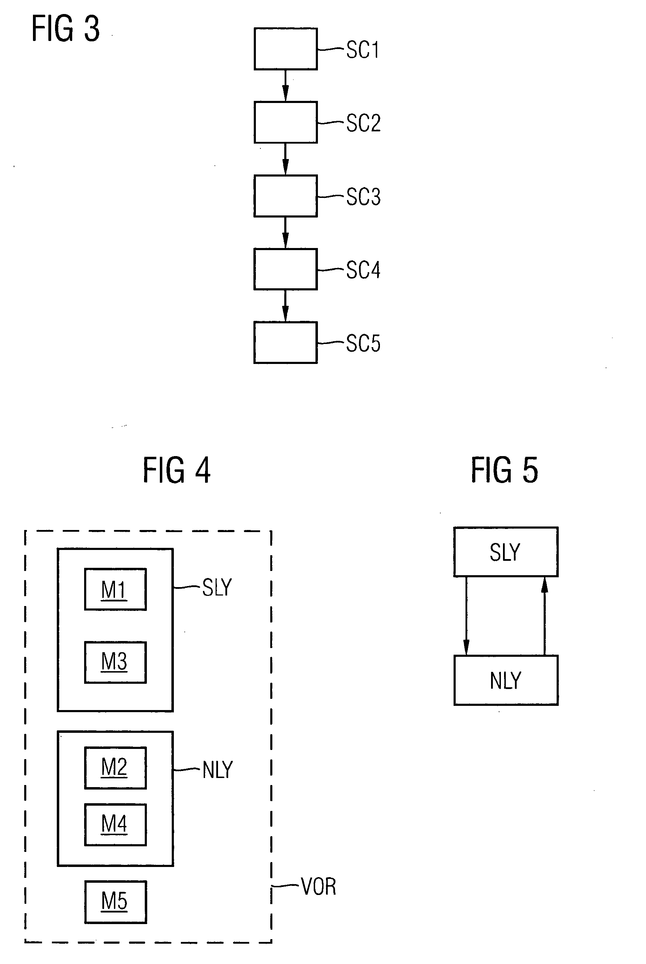

Heutzutage ist es üblich Kommunikationsbeziehungen zwischen den Einheiten mittels eines OSI - Modells zu beschreiben (OSI - Open Systems Interconnection). Dabei wird die Kommunikation in mehrere aufeinander aufbauende Schichten dargestellt. Zur Durchführung des vorliegenden Verfahrens wird der hierarchische Aufbau dieses Schichtenmodells dadurch durchbrochen, dass eine Kommunikation zwischen den Schichten Serviceschicht und Kommunikationsschicht direkt durchführbar ist. In diesem Beispiel entspricht die Kommunikationsschicht den OSI Schichen 1-3. Der Serviceschicht sitzt in der OSI Schicht 7. Bei der Kommunikation wird direkt zwischen der Serviceschicht und der Kommunikationsschicht mit Umgehung der OSI Schichten 4 bis 6. Mit Hilfe von Figur 3 soll dies näher erläutert werden, wobei Figur 5 exemplarisch einen Informationsaustausch zwischen der Serviceschicht SLY und der Kommunikationsschicht NLY zeigt..
Schritt SC1:
   Der Serviceschicht wird die Netztopologie des Netzwerks NET bspw. von der Kommunikationsschicht mitgeteilt. Die Anwendung wird durch die Einheiten gebildet auf denen die unterschiedlichen Services T1, T2, T3, T4, d.h. Teilanwendungen, realisiert sind, wobei die Einheiten das embedded Netzwerk bilden.
   Dabei wird die Anwendung durch ein Konglomerat von Services gebildet. Im embedded Netzwerk mit Service orientierter Architektur wird zumindest ein Teil der Services, die bspw. logische Verknüpfungen zwischen Messwerten herstellen, auf unterschiedlichen Motes (Motes - Bezeichnung für die Einheiten,
   falls diese als drahtlose Sensorknoten mit einer Möglichkeit zum Ausführen von zumindest eines Services) platziert. Aufg-rund der Netztopologie kann die Serviceschicht die Motes und somit die Services derart anordnen, dass die Kommunikationswege, d.h. die Kommunikationsverbindungen, möglichst kurz gewählt sind. Hiermit lässt sich Energie zum drahtlosen Versenden von Daten, wie Messwerten, reduzieren. Zudem können Redundanzanforderungen des Servicelayers, wie bspw. mehrfach Verbindungen zur garantierten Datenübertragung, berücksichtigt werden.
Schritt SC2:
   In einem nächsten Schritt übermittelt die Serviceschicht ein Service-Routing an die Kommunikationsschicht. Das Service-Routing gibt an, welche Einheit Informationen miteinander austauschen, um die Anwendung zu realisieren. Somit gibt das Service-Routing die ersten Einheiten an, die in diesem Beispiel als Motes realisiert sind. Anhand der Service-Routing Informationen ist die Kommunikationsschicht in der Lage die Kommunikationsanforderungen der Motes zu erkennen, wie bspw. welche Teilverbindungen zwischen den Motes nicht benötigt werden.
Schritt SC3:
   In diesem Schritt werden die Kanten der Netztopologie, also die Teilverbindungen der jeweiligen Kommunikationsverbindungen durch kommunikationsspezifische QoS Parameter wie Sendestärke, Bandbreite, Verzögerung, etc. beschrieben und der Serviceschicht mitgeteilt. Anhand dieser Informationen wählt die Serviceschicht diejenigen Teilverbindungen aus, die die jeweiligen QoS-Bedingungen zum Verbinden von jeweils zwei ersten Einheiten erfüllen. Beispielsweise erfüllt die ausgewählte Teilverbindung eine Echtzeitbedingung oder ist bzgl. einer Übertragungsqualität besonders zuverlässig.
Schritt SC4:
   Im Schritt SC4 übermittelt die Serviceschicht die QoS-Anforderung zum Realisieren der Anwendung an die Kommunikationsschicht, die die Kommunikationsinfrastruktur, also das Routing des Netzwerks, entsprechend den QoS-Anforderungen konfiguriert, bspw. mittels einer Netmanager Komponente wie sie beim WirelessHART Standard definiert ist.
Schritt SC5:
   Zum Informationsaustausch zwischen den Services der Anwendung, auch Applikation genannt, werden Nachrichten in der Kommunikationsschicht, die eine geeignete Kommunikationsbeziehung, die z.B. eine gemeinsame Sender-Empfänger-Beziehung, Broadcast oder Multicast einsetzen, derart erstellt, dass diese in einer Nachricht zusammengefasst und ggfs. nur einmal versendet werden. Ferner können auch Nachrichten auf einem Teilpfad zusammengefasst werden und anschließend wieder in separate Nachrichten aufgeteilt werden. Hierdurch wird erreicht, dass die Nachrichten äußerst effizient übertragbar sind und dadurch Sendeenergie eingespart werden kann. Ferner können Nachrichten, wie die Keep-Alive Nachricht, derart erweitert werden, dass diese zusätzlich Informationen der Serviceschicht transportieren kann.

Figur 4 zeigt eine Vorrichtung VOR zum Plazieren der Einheiten E1, ..., E14 zum Ausführen einer Anwendung in einem verteilten System, wobei die Anwendung in zumindest zwei Services aufteilbar ist und die Einheiten über ein Netzwerk NET mit Kommunikationsverbindungen V1, V2, V3 zumindest teilweise miteinander kommunizieren können, mit folgenden Mitteln:
- Erstes Mittel M1 zum Zuordnen der jeweiligen Services, d.h. Teilanwendungen, zu den jeweiligen ersten Einheiten aus der Gesamtmenge aller vorhandenen Einheiten derart, dass
   (a) die jeweilige erste Einheit den zugeordneten Service ausführen kann,
   (b) eine Anzahl an Einheiten auf den Kommunikationsverbindungen zum Verbinden der ersten Einheiten minimierbar ist;
- Zweites Mittel zum Ermitteln der jeweiligen Verbindungsparameter für die jeweiligen Einheiten;
- Drittes Mittel M3 zum Bestimmen der Kommunikationsverbindungen zum Verbinden von zwei der ersten Einheiten;
- Viertes Mittel M4 zum Konfigurieren des Netzwerks NET gemäß dem Bestimmen der Kommunikationsverbindungen V1.

Die Vorrichtung umfasst ferner ein fünftes Mittel M5, das derart ausgestaltet ist, dass Informationen, die von einer der ersten Einheiten zu zwei der ersten Einheiten zu übermitteln ist, zumindest über eine Teilverbindung zu einer der Einheiten mittels einer einzigen Nachricht übertragbar und dann zur Übermittlung zu den zwei der ersten Einheiten als zwei separate Nachrichten weitersendbar ist.

Das erste und dritte Mitteln können mittels der Serviceschicht SLY und das zweite und vierte Mittel mittels der Kommunikationsschicht realisiert werden.

Die Einheiten, die Serviceschicht und die Kommunikationsschicht können in Software, Hardware oder in einer Kombination aus Soft- und Hardware implementiert und ausgeführt werden, wie bspw. durch einen jeweiligen Computer. Ein Anwendungsgebiet der Erfindung ist bspw. die Prozessautomatisierung, wie in Industrieanlagen oder bei Gebäudemanagementanlagen.

## Patentansprüche

1. Verfahren zum Zuordnen und zum Ausführen einer Anwendung in Einheiten eines verteilten Systems,
wobei die Anwendung in zumindest zwei Teilanwendungen (T1, T2, T3) aufgeteilt wird und mittels Einheiten (E1, ..., E14) des verteilten Systems implementiert wird, welche über ein Netzwerk (NET) mit Kommunikationsverbindungen (V1, V2, V3) drahtlos Informationen austauschen können, bei dem folgende Schritte durchgeführt werden:
Zuordnen (SC1) der jeweiligen Teilanwendung (T1, T2, T3) zu einer jeweiligen ersten Einheiten (E2, E2', E3, E3', E7, E7', E12, E12', E14, E14') der Einheiten (E1, ..., E14) derart, dass
(a) die jeweilige erste Einheit (E2, E2', E3, E3', E7, E7', E12, E12', E14, E14') die zugeordnete Teilanwendung (T1, T2, T3) ausführen kann,
(b) eine Anzahl an Einheiten (E1, ..., E14) auf den Kommunikationsverbindungen (V1, V2, V3) zum Verbinden der ersten Einheiten (E2, E2', E3, E3', E7, E7', E12, E12', E14, E14') minimiert wird;
Ermitteln (SC3) von jeweiligen Verbindungsparametern (Q1, Q2, Q3) für die jeweiligen Kommunikationsverbindungen (V1, V2, V3);
Bestimmen der Kommunikationsverbindungen (V1) zum Verbinden von zwei der ersten Einheiten (E2, E2', E3, E3', E7, E7', E12, E12', E14, E14') ;
Konfigurieren (SC5) des Netzwerks (NET) gemäß dem Bestimmen der Kommunikationsverbindungen (V1),
**dadurch gekennzeichnet,**
**dass** Informationen, die von einer der ersten Einheiten (E2, E2', E3, E3', E7, E7', E12, E12', E14, E14') zu zwei der ersten Einheiten (E2, E2', E3, E3', E7, E7', E12, E12', E14, E14') zu übermitteln sind, zumindest über eine Teilverbindung zu einer der Einheiten (E1, ..., E14) mittels einer einzigen Nachricht übertragen und dann zur Übermittlung zu den zwei der ersten Einheiten (E2, E2', E3, E3', E7, E7', E12, E12', E14, E14') als zwei separate Nachrichten weitergesendet werden.

2. Verfahren nach Anspruch 1, bei dem
beim Zuordnen der jeweiligen Teilanwendung (T1, T2, T3) ferner gewährleistet wird, dass der jeweilige Verbindungsparameter (Q1, Q2, Q3) einer der Kommunikationsverbindungen (V1, V2, V3) zum Verbinden von zwei der ersten Einheiten (E2, E2', E3, E3', E7, E7', E12, E12', E14, E14') zumindest eine jeweilige Anforderung (AF1) zum Austausch von Informationen zwischen den, den zwei der ersten Einheiten (E7', E12', E14') zugeordneten, Teilanwendungen (T1, T2, T3) erreicht.

3. Verfahren nach Anspruch 1 oder 2, bei dem
zumindest eine der Kommunikationsverbindungen (D), die zum Austausch von Informationen zwischen zwei der ersten Einheiten (E2, E2', E3, E3', E7, E7', E12, E12', E14, E14') ungenutzt bleibt, deaktiviert wird.

4. Verfahren nach einem der vorangehenden Ansprüche, bei dem das Zuordnen der jeweiligen Teilanwendung (T1, T2, T3) und Bestimmen der Kommunikationsverbindungen durch eine Serviceschicht (SLY) und das Ermitteln von jeweiligen Verbindungsparametern (Q1, Q2, Q3) und Konfigurieren des Netzwerks (NET) durch eine Kommunikationsschicht (NLY) durch Austausch von Informationen ausgeführt werden.

5. Vorrichtung (VOR) zum Zuordnen und zum Ausführen einer Anwendung in Einheiten eines verteilten Systems,
wobei die Anwendung in zumindest zwei Teilanwendungen (T1, T2, T3) aufgeteilt wird und mittels Einheiten (E1, ..., E14) des verteilten Systems implementiert wird, welche über ein Netzwerk (NET) mit Kommunikationsverbindungen (V1, V2, V3) drahtlos Informationen austauschen können, mit folgenden Mitteln:
Erstes Mittel (M1) zum Zuordnen der jeweiligen Teilanwendung (T1, T2, T3) zu einer jeweiligen ersten Einheiten (E2, E2', E3, E3', E7, E7', E12, E12', E14, E14') der Einheiten (E1, ..., E14) derart, dass
(a) die jeweilige erste Einheit (E2, E2', E3, E3', E7, E7', E12, E12', E14, E14') die zugeordnete Teilanwendung (T1, T2, T3) ausführen kann,
(b) eine Anzahl an Einheiten (E1, ..., E14) auf den Kommunikationsverbindungen (V1, V2, V3) zum Verbinden der ersten Einheiten (E2, E2', E3, E3', E7, E7', E12, E12', E14, E14') minimierbar ist;
Zweites Mittel (M2) zum Ermitteln von jeweiligen Verbindungsparametern (Q1, Q2, Q3) für die jeweiligen Kommunikationsverbindungen (V1, V2, V3);
Drittes Mittel (M3) zum Bestimmen der Kommunikationsverbindungen (V1, V2, V3) zum Verbinden von zwei der ersten Einheiten (E2, E2', E3, E3', E7, E7', E12, E12', E14, E14');
Viertes Mittel (M4) zum Konfigurieren des Netzwerks (NET) gemäß dem Bestimmen der Kommunikationsverbindungen (V1, V2, V3);
**gekennzeichnet durch**
ein fünftes Mittel (M5), das derart ausgestaltet ist, dass Informationen, die von einer der ersten Einheiten (E2, E2', E3, E3', E7, E7', E12, E12', E14, E14') zu zwei der ersten Einheiten (E2, E2', E3, E3', E7, E7', E12, E12', E14, E14') zu übermitteln sind, zumindest über eine Teilverbindung zu einer der Einheiten (E1, ..., E14) mittels einer einzigen Nachricht übertragbar und dann zur Übermittlung zu den zwei der ersten Einheiten (E2, E2', E3, E3', E7, E7', E12, E12', E14, E14') als zwei separate Nachrichten weitersendbar sind.

6. Vorrichtung (VOR) nach Anspruch 5, bei der das erste Mitteln (M1) ferner derart ausgestaltet ist, dass beim Zuordnen der jeweiligen Teilanwendung (T1, T2, T3) ferner gewährleistbar ist, dass der jeweilige Verbindungsparameter (Q1, Q2, Q3) einer der Kommunikationsverbindungen (V1, V2, V3) zum Verbinden von zwei der ersten Einheiten (E2, E2', E3, E3', E7, E7', E12, E12', E14, E14') zumindest eine jeweilige Anforderung zum Austausch von Informationen zwischen den, den zwei der ersten Einheiten (E2, E2', E3, E3', E7, E7', E12, E12', E14, E14') zugeordneten, Teilanwendungen (T1, T2, T3) erreicht.

7. Vorrichtung (VOR) nach Anspruch 5 oder 6, bei der das vierte Mitteln (M4) ferner derart ausgestaltet ist, dass zumindest eine der Kommunikationsverbindungen (D), die zum Austausch von Informationen zwischen zwei der ersten Einheiten (E2, E2', E3, E3', E7, E7', E12, E12', E14, E14') ungenutzt bleibt, deaktivierbar ist.

8. Vorrichtung (VOR) nach einem der Ansprüche 5 bis 7, bei der
das Zuordnen der jeweiligen Teilanwendung (T1, T2, T3) und Bestimmen der Kommunikationsverbindungen durch eine Serviceschicht (SLY) und das Ermitteln von jeweiligen Verbindungsparametern (Q1, Q2, Q3) und Konfigurieren des Netzwerks (NET) durch eine Kommunikationsschicht (NLY) zum Austausch von Informationen ausführbar sind.

## Claims

1. Method for assigning and executing an application in units of a distributed system,
wherein the application is divided into at least two sub-applications (T1, T2, T3) and is implemented by means of units (E1, ..., E14) of the distributed system which can exchange information wirelessly via a network (NET) with communication connections (V1, V2, V3), in which the following steps are carried out:
assigning the respective sub-application (T1, T2, T3) to one of the respective first units (E2, E2', E3, E3', E7, E7', E12, E12', E14, E14') of the units (E1, ..., E14), such that
(a) the respective first unit (E2, E2', E3, E3', E7, E7', E12, E12', E14, E14') can execute the assigned sub-application (T1, T2, T3),
(b) a number of units (E1, ..., E14) is reduced to the communication connections (V1, V2, V3) for connecting the first units (E2, E2', E3, E3', E7, E7', E12, E12', E14, E14');
determining (SC3) respective connection parameters (Q1, Q2, Q3) for the respective communication connections (V1, V2, V3);
determining the communication connections (V1) for connecting two of the first units (E2, E2', E3, E3', E7, E7', E12, E12', E14, E14');
configuring (SC5) the network (NET) according to the determination of the communication connections (V1),
**characterised in that**
information which is to be transmitted from one of the first units (E2, E2', E3, E3', E7, E7', E12, E12', E14, E14') to two of the first units (E2, E2', E3, E3', E7, E7', E12, E12', E14, E14') is transmitted at least via a partial connection to one of the units (E1, ..., E14) by means of a single message and is then forwarded as two separate messages for transmitting to the two of the first units (E2, E2', E3, E3', E7, E7', E12, E12', E14, E14').

2. Method according to claim 1, in which
when assigning the respective sub-application (T1, T2, T3) it is further ensured that the respective connection parameter (Q1, Q2, Q3) of one of the communication connections (V1, V2, V3) for connecting two of the first units (E2, E2', E3, E3', E7, E7', E12, E12', E14, E14') satisfies at least one respective requirement (AF1) for exchanging information between the sub-applications (T1, T2, T3) assigned to the two of the first units (E7', E12', E14').

3. Method according to claim 1 or 2, in which at least one of the communication connections (D) which is not used for exchanging information between two of the first units (E2, E2', E3, E3', E7, E7', E12, E12', E14, E14') is deactivated.

4. Method according to one of the preceding claims, in which the assignment of the respective sub-application (T1, T2, T3) and the determination of the communication connections through a service layer (SLY) and the determination of respective connection parameters (Q1, Q2, Q3) and the configuration of the network (NET) through a communication layer (NLY) are executed by exchanging information.

5. Device (VOR) for assigning and executing an application in units of a distributed system,
wherein the application is divided into at least two sub-applications (T1, T2, T3) and is implemented by means of units (E1, ..., E14) of the distributed system which can exchange information wirelessly via a network (NET) with communication connections (V1, V2, V3), comprising the following means:
first means (M1) for assigning the respective sub-application (T1, T2, T3) to one of the respective first units (E2, E2', E3, E3', E7, E7', E12, E12', E14, E14') of the units (E1, ..., E14), such that
(a) the respective first unit (E2, E2', E3, E3', E7, E7', E12, E12', E14, E14') can execute the assigned sub-application (T1, T2, T3),
(b) a number of units (E1, ..., E14) can be reduced to the communication connections (V1, V2, V3) for connecting the first units (E2, E2', E3, E3', E7, E7', E12, E12', E14, E14');
second means (M2) for determining respective connection parameters (Q1, Q2, Q3) for the respective communication connections (V1, V2, V3);
third means (M3) for determining the communication connections (V1, V2, V3) for connecting two of the first units (E2, E2', E3, E3', E7, E7', E12, E12', E14, E14');
fourth means (M4) for configuring the network (NET) according to the determination of the communication connections (V1, V2, V3);
**characterised by**
a fifth means (M5) which is designed such that information which is to be transmitted from one of the first units (E2, E2', E3, E3', E7, E7', E12, E12', E14, E14') to two of the first units (E2, E2', E3, E3', E7, E7', E12, E12', E14, E14') can be transmitted at least via a partial connection to one of the units (E1, ..., E14) by means of a single message and then can be forwarded as two separate messages for transmitting to the two of the first units (E2, E2', E3, E3', E7, E7', E12, E12', E14, E14').

6. Device (VOR) according to claim 5, in which the first means (M1) is further designed such that when assigning the respective sub-application (T1, T2, T3) it can further be ensured that the respective connection parameter (Q1, Q2, Q3) of one of the communication connections (V1, V2, V3) for connecting two of the first units (E2, E2', E3, E3', E7, E7', E12, E12', E14, E14') satisfies at least one respective requirement for exchanging information between the sub-applications (T1, T2, T3) assigned to the two of the first units (E2, E2', E3, E3', E7, E7', E12, E12', E14, E14').

7. Device (VOR) according to claim 5 or 6, in which the fourth means (M4) is further designed such that at least one of the communication connections (D) which is not used for exchanging information between two of the first units (E2, E2', E3, E3', E7, E7', E12, E12', E14, E14') can be deactivated.

8. Device (VOR) according to one of claims 5 to 7, in which the assignment of the respective sub-application (T1, T2, T3) and the determination of the communication connections through a service layer (SLY) and the determination of respective communication parameters (Q1, Q2, Q3) and the configuration of the network (NET) through a communication layer (NLY) can be executed for exchanging information.

## Revendications

1. Procédé pour assigner et exécuter une application dans des unités d'un système réparti, l'application étant subdivisée en au moins deux applications partielles (T1, T2, T3) et étant implémentée au moyen d'unités (E1, ..., E14) du système réparti qui peuvent échanger des informations sans fil via un réseau (NET) comportant des liaisons de communication (V1, V2, V3), selon lequel les étapes suivantes sont exécutées :
- assignation (SC1) de l'application partielle respective (T1, T2, T3) à une première unité respective (E2, E2', E3, E3', E7, E7', E12, E12', E14, E14') des unités (E1, ..., E14) de manière telle que
**a)** la première unité respective (E2, E2', E3, E3', E7, E7', E12, E12', E14, E14') peut exécuter l'application partielle assignée (T1, T2, T3),
**b)** un nombre d'unités (E1, ..., E14) sur les liaisons de communication (V1, V2, V3) destinées à relier les premières unités (E2, E2', E3, E3', E7, E7', E12, E12', E14, E14') est minimisé ;
- détermination (SC3) de paramètres de liaison respectifs (Q1, Q2, Q3) pour les liaisons de communication respectives (V1, V2, V3) ;
- détermination des liaisons de communication (V1) destinées à relier deux des premières unités (E2, E2', E3, E3', E7, E7', E12, E12', E14, E14') ;
- configuration (SC5) du réseau (NET) conformément à la détermination des liaisons de communication (V1) ;
**caractérisé en ce que** des informations à transmettre d'une des premières unités (E2, E2', E3, E3', E7, E7', E12, E12', E14, E14') à deux des premières unités (E2, E2', E3, E3', E7, E7', E12, E12', E14, E14') sont transmises au moins via une liaison partielle vers l'une des unités (E1, ..., E14) au moyen d'un message unique, puis sont retransmises sous la forme de deux messages séparés aux fins de la transmission aux deux des premières unités (E2, E2', E3, E3', E7, E7', E12, E12', E14, E14').

2. Procédé selon la revendication 1, selon lequel il est en outre assuré, lors de l'assignation de l'application partielle respective (T1, T2, T3), que le paramètre de liaison respectif (Q1, Q2, Q3) d'une des liaisons de communication (V1, V2, V3) destinée à relier deux des premières unités (E2, E2', E3, E3', E7, E7', E12, E12', E14, E14') satisfait au moins à une exigence respective (AF1) pour l'échange d'informations entre les applications partielles (T1, T2, T3) assignées aux deux des premières unités (E7', E12', E14').

3. Procédé selon la revendication 1 ou 2, selon lequel au moins l'une des liaisons de communication (D) qui reste non utilisée pour l'échange d'informations entre deux des premières unités (E2, E2', E3, E3', E7, E7', E12, E12', E14, E14') est désactivée.

4. Procédé selon l'une des revendications précédentes, selon lequel l'assignation de l'application partielle respective (T1, T2, T3) et la détermination des liaisons de communication sont effectuées par une couche de service (SLY), et la détermination de paramètres de liaison respectifs (Q1, Q2, Q3) et la configuration du réseau (NET) sont effectuées par une couche de communication (NLY) par échange d'informations.

5. Dispositif (VOR) pour assigner et exécuter une application dans des unités d'un système réparti, l'application étant subdivisée en au moins deux applications partielles (T1, T2, T3) et étant implémentée au moyen d'unités (E1, ..., E14) du système réparti qui peuvent échanger des informations sans fil via un réseau (NET) comportant des liaisons de communication (V1, V2, V3), comportant les moyens suivants :
- un premier moyen (M1) pour assigner l'application partielle respective (T1, T2, T3) à une première unité respective (E2, E2', E3, E3', E7, E7', E12, E12', E14, E14') des unités (E1, ..., E14) de manière telle que
**a)** la première unité respective (E2, E2', E3, E3', E7, E7', E12, E12', E14, E14') peut exécuter l'application partielle assignée (T1, T2, T3),
**b)** un nombre d'unités (E1, ..., E14) sur les liaisons de communication (V1, V2, V3) destinées à relier les premières unités (E2, E2', E3, E3', E7, E7', E12, E12', E14, E14') peut être minimisé ;
- un deuxième moyen (M2) pour déterminer des paramètres de liaison respectifs (Q1, Q2, Q3) pour les liaisons de communication respectives (V1, V2, V3) ;
- un troisième moyen (M3) pour déterminer des liaisons de communication (V1, V2, V3) destinées à relier deux des premières unités (E2, E2', E3, E3', E7, E7', E12, E12', E14, E14') ;
- un quatrième moyen (M4) pour configurer le réseau (NET) conformément à la détermination des liaisons de communication (V1, V2, V3) ;
**caractérisé par** un cinquième moyen (M5) qui est réalisé de manière telle que des informations à transmettre d'une des premières unités (E2, E2', E3, E3', E7, E7', E12, E12', E14, E14') à deux des premières unités (E2, E2', E3, E3', E7, E7', E12, E12', E14, E14') peuvent être transmises au moins via une liaison partielle vers l'une des unités (E1, ..., E14) au moyen d'un message unique, puis être retransmises sous la forme de deux messages séparés aux fins de la transmission aux deux des premières unités (E2, E2', E3, E3', E7, E7', E12, E12', E14, E14').

6. Dispositif (VOR) selon la revendication 5, selon lequel le premier moyen (M1) est en outre réalisé de manière telle qu'il est en outre assuré, lors de l'assignation de l'application partielle respective (T1, T2, T3), que le paramètre de liaison respectif (Q1, Q2, Q3) d'une des liaisons de communication (V1, V2, V3) destinée à relier deux des premières unités (E2, E2', E3, E3', E7, E7', E12, E12', E14, E14') satisfait au moins à une exigence respective (AF1) pour l'échange d'informations entre les applications partielles (T1, T2, T3) assignées aux deux des premières unités (E2, E2', E3, E3', E7, E7', E12, E12', E14, E14').

7. Dispositif (VOR) selon la revendication 5 ou 6, selon lequel le quatrième moyen (M4) est en outre réalisé de manière telle qu'au moins l'une des liaisons de communication (D) qui reste non utilisée pour l'échange d'informations entre deux des premières unités (E2, E2', E3, E3', E7, E7', E12, E12', E14, E14') peut être désactivée.

8. Dispositif (VOR) selon l'une des revendications 5 à 7, selon lequel l'assignation de l'application partielle respective (T1, T2, T3) et la détermination des liaisons de communication peuvent être effectuées par une couche de service (SLY), et la détermination de paramètres de liaison respectifs (Q1, Q2, Q3) et la configuration du réseau (NET) sont effectuées par une couche de communication (NLY) par échange d'informations.
